# EUROPÄISCHE PATENTSCHRIFT

(11) **EP 0 824 247 B1**
(45) Veröffentlichungstag und Bekanntmachung des Hinweises auf die Patenterteilung: **18.10.2000**
(21) Anmeldenummer: 97113394.7
(22) Anmeldetag: 04.08.1997
(51) Int. Cl.: G06T 17/40, G06F 3/033

(54) **Verfahren zum Modifizieren dreidimensionaler Objekte**
3-D Object modification method
Méthode pour modifier des objets tridimensionnels

(30) Priorität: 09.08.1996 DE 19632223
(43) Veröffentlichungstag der Anmeldung: 18.02.1998
(73) Patentinhaber: Autodesk, Inc., San Rafael, California 94903 (US)
(72) Erfinder: Andersson, Hakan, 635 05 Eskilstuna (SE)
(74) Vertreter: Dendorfer, Claus, Dr.

(56) Entgegenhaltungen:
- WO-A-95/11482

## Beschreibung

Die vorliegende Erfindung betrifft ein Verfahren zum Modifizieren eines dreidimensionalen Objektes, das auf einem Bildschirm dargestellt ist, mittels einer Eingabeeinrichtung, vorzugsweise einer Mauseingabeeinrichtung, die nur zweidimensionale Eingaben gestattet.

Bekannte Grafikprogramme weisen eine Vielzahl von Möglichkeiten auf, ein erstelltes Objekt zu modifizieren. Beispielsweise ist es möglich, das dargestellte Objekt an einen anderen Ort zu verschieben, das Objekt zu drehen oder in einer oder zwei Dimensionen zu stauchen oder zu strecken.

Hochwertige Grafikprogramme, wie beispielsweise das Programm AutoCAD®, weisen darüber hinaus die Möglichkeit auf, von einem bestimmten Objekt gleichzeitig mehrere Ansichten auf dem Bildschirm darzustellen, wobei darüber hinaus in der Regel auch eine dreidimensionale, d.h. perspektivische Ansicht möglich ist. Modifikationen des Objektes sind bei derartigen Anwendungen jedoch nur innerhalb der zweidimensionalen Darstellungen möglich, wobei eine Änderung in einer bestimmten zweidimensionalen Darstellung auch für die anderen zweidimensionalen Darstellungen mitberechnet wird, so daß der Benutzer die Auswirkungen einer vorgenommenen Änderung gleichzeitig in allen Darstellungen, auch in der dreidimensionalen Darstellung, verfolgen kann. Derartige Grafikprogramme lassen jedoch keine Modifikation des Objektes direkt innerhalb der dreidimensionalen Darstellung zu.

Es ist die Aufgabe der vorliegenden Erfindung, ein Verfahren anzugeben, mit dem eine direkte Modifikation eines dreidimensional dargestellten Objektes mittels einer Eingabeeinrichtung, vorzugsweise einer Mauseingabeeinrichtung, die nur zweidimensionale Eingaben gestattet, vorgenommen werden kann.

Ein derartiges Verfahren ist aus dem Dokument WO95/11482 bekannt. Gemäß diesem Verfahren wird zu einem gegebenen dreidimensionalen Objekt auf dem Bildschirm ein umgebender Körper dargestellt, an dem gewisse Modifikationspunkte und -flächen ausgezeichnet sind. Diese kann der Benutzer mittels einer Eingabeeinrichtung manipulieren, um analoge Modifikationen an dem umgebenen Objekt auszulösen.

Gelöst wird die Aufgabe auch durch ein Verfahren mit folgenden Schritten:

Erzeugen eines dreidimensionalen Objektes, Anzeigen einer dreidimensionalen Repräsentation des dreidimensionalen Objektes auf einen Bildschirm, Aktivieren des dreidimensionalen Objektes mittels einer Operation der Eingabeeinrichtung, die sich auf die Repräsentation des Objektes bezieht, Anzeigen einer Repräsentation eines dreidimensionalen Koordinatensystems auf dem Bildschirm, wobei das dreidimensionale Koordinatensystem dem aktivierten dreidimensionalen Objekt zugeordnet ist, Auswählen einer der Achsen des dreidimensionalen zugeordenten Koordinatensystems mittels einer Operation der Eingabeeinrichtung, wobei sich die Eingabeoperation auf die auf dem Bildschirm dargestellte Repräsentation des Koordinatensystems bezieht, Verschieben des Ursprungspunktes des zugeordneten Koordinatensystems innerhalb eines globalen dreidimensionalen Koordinatensystems entlang einer Geraden, die durch die Orientierung der ausgewählten Achse des zugeordneten Koordinatensystems innerhalb des globalen dreidimensionalen Koordinatensystems festgelegt ist und in eine Richtung auf der Geraden, die durch eine Operation mittels der Eingabeeinrichtung festgelegt wird, Berechnen des dreidimensionalen Objektes in bezug auf das globale Koordinatensystem nach einer Verschiebung entsprechend der Verschiebung des Urprungspunktes des zugeordneten Koordinatensystems, und Anzeigen einer Repräsentation des verschobenen dreidimensionalen Objektes auf dem Bildschirm.

Gemäß bevorzugten Ausführungsformen ist darüber hinaus auch eine Drehung des dargestellten Objektes möglich, wobei dies durch folgende weiteren Schritte erreicht wird:

Auswählen einer ersten Achse des zugeordneten dreidimensionalen Koordinatensystems mittels einer Operation der Eingabeeinrichtung, wobei sich die Eingabeoperation auf die auf dem Bildschirm dargestellte Repräsentation des zugeordneten Koordinatensystems bezieht, Drehen des zugeordneten Koordinatensystems um die entsprechende zweite oder dritte Koordinatenachse, wobei die zweite Achse ausgewählt wird, wenn mittels der Eingabeeinrichtung eine Verschiebung der ersten Achse in Richtung der dritten Achse vorgegeben wird und wobei um die dritte Achse gedreht wird, wenn mittels der Eingabeeinrichtung eine Verschiebung der ersten Achse in Richtung der zweiten Achse vorgegeben wird, Berechnen des dreidimensionalen Objektes bezüglich des globalen Koordinatensystems nach einer Drehung des Objektes entsprechend der Drehung des zugeordneten Koordinatensystems, und Anzeigen einer Repräsentation des gedrehten dreidimensionalen Objektes auf dem Bildschirm.

Bevorzugterweise bietet das erfindungsgemäße Verfahren auch die Möglichkeit, das dreidimensional dargestellte Ojekt zu skalieren, wobei dies durch folgende Schritte erreicht wird:

Auswählen einer Achse des zugeordneten dreidimensionalen Koordinatensystems mittels einer Operation der Eingabeeinrichtung, wobei sich die Eingabeoperation auf die auf dem Bildschirm dargestellte Repräsentation des Koordinatensystems bezieht, Eingeben einer Dehnung oder Streckung der ausgewählten Achse des zugeordneten Koordinatensystems mittels der Eingabeeinrichtung, Berechnen des dreidimensionalen Objektes bezüglich des globalen Koordinatensystems nach einer entsprechenden Streckung oder Stauchung des Objektes entlang der ausgewählten Achse des zugeordneten Koordinatensystems, und Anzeigen einer dreidimensionalen Repräsentation des gestreckten oder gestauchten dreidimensionalen Objektes auf dem Bildschirm.

Vorzugsweise erfolgen Eingabeoperationen mittels einer Mauseinrichtung. Bekanntermaßen können mittels einer Maus sowohl Klickoperationen als auch Bewegungsoperationen durchgeführt werden. Gemäß einer bevorzugten Ausführungsform der vorliegenden Erfindung wird die Schwierigkeit der Umsetzung zweidimensionaler Mausbewegungen für ein dreidimensional dargestelltes Objekt dadurch gelöst, daß eine Modifikation des dargestellten Objektes indirekt durch Modifikation des ihm zugeordneten Koordinatensystems erfolgt. Vorzugsweise weist die Darstellung des entsprechenden Koordinatensystems diskrete Modifikationspunkte auf, so daß in zuverlässiger Weise detektiert werden kann, welche Modifikation durch eine getätigte Mausoperation vom Benutzer gewünscht war. Dadurch, daß das dargestellte Koordinatensystem beispielsweise im Ursprung sowie an den Enden der drei dargestellten Achsen die erwähnten Modifikationspunkte aufweist, kann zunächst in sehr zuverlässiger Weise festgestellt werden, ob der Benutzer eine Modifikation vom Zentrum des Koordinatensystems oder von den Endpunkten der Achsen aus ausführen will. Das Anklicken des Zentrums des Koordinatensystems kann beispielsweise mit einer Verschiebeoperation zum Verschieben des gesamten Koordinatensystems über den Bildschirm verknüpft sein. Die Richtung, in die das Koordinatensystem dabei bewegt wird, kann dabei vorzugsweise nur entlang der durch das Koordinatensystem vorgegebenen drei Hauptrichtungen erfolgen. In welche der drei Hauptrichtungen die Bewegung erfolgen soll, wird dabei vorzugsweise durch Erfassen einer vom Benutzer durchgeführten Mausbewegung sowie eines Vergleichs eines davon abgeleiteten Bewegungsvektors mit den Vektoren der Hauptachsen durchgeführt. Diejenige Achse, die am besten mit dem Bewegungsvektor übereinstimmt, wird als Achse ausgewählt, entlang der die Verschiebung schließlich erfolgt.

Vorzugsweise wird eine Drehung des Koordinatensystems und damit des Objektes sowie der Darstellung des Objektes dadurch bewirkt, daß einer der Modifikationspunkte an den Enden der Achsen angeklickt wird und anschließend eine Mausbewegung durchgeführt wird, die in Richtung einer der beiden weiteren Achsen verläuft. Dies führt dann zu einer Rotation um die Achse, die weder angeklickt wurde noch parallel zur Mausbewegung verläuft. In entsprechender Weise ist auch eine Skalierung des Objektes sowie der Repräsentation des Objektes über eine Skalierung des zugeordneten Koordinatensystems möglich. Hierzu wird vorzugsweise wiederum einer der Modifikationspunkte an den Enden der Achsen des Koordinatensystems angeklickt, und anschließend wird eine Mausbewegung entlang der entsprechenden Achse ausgeführt. Eine Bewegung auf den Ursprung des Koordinatensystems hin bewirkt eine Stauchung entlang der entsprechenden Dimension des Objektes, eine Bewegung vom Ursprung des Koordinatensystems weg bewirkt eine entsprechende Streckung.

Weitere bevorzugte Ausgestaltungen der vorliegenden Erfindung sind Gegenstand der Unteransprüche.

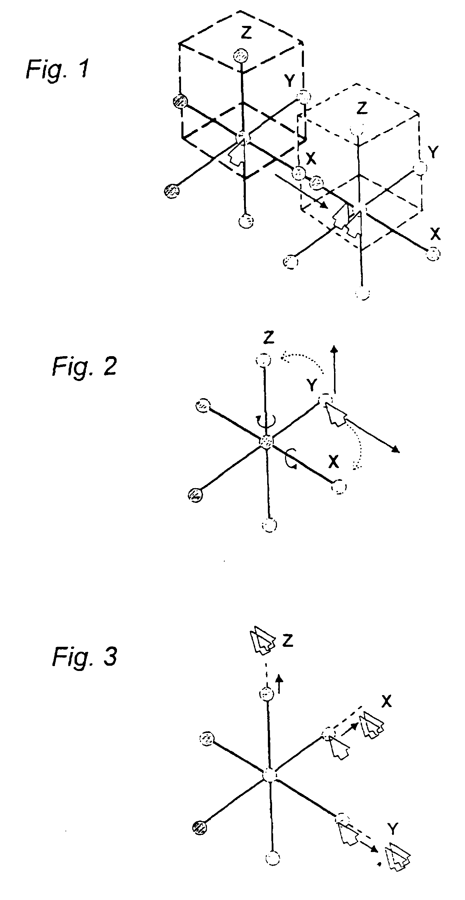

Die vorliegende Erfindung wird im folgenden unter Bezugnahme auf die beiliegenden Zeichnungen näher erläutert. Dabei zeigen die Fig. 1 bis 3 Darstellungen eines einem dreidimensionalen Objekt zugeordneten Koordinatensystems sowie entsprechend angedeuteten Mausoperationen, zur Erläuterung der Modifikationen Verschieben, Drehen sowie Skalieren.

Die vorliegende Erfindung ist insbesondere zur Anwendung im Zusammenhang mit dem Grafikprogramm AutoCAD® oder ähnlichen Programmen geeignet. Derartige Programme weisen Datenbanken auf, aus denen elementare Objekte, wie beispielsweise Zylinder, Quader etc. entnommen werden können, die dann vom Benutzer durch Modifikationsoperationen auf die gewünschte Größe und in die entsprechende Lage gebracht werden. Bevorzugterweise wird diesen elementaren Objekten beim Auslesen in intelligenter Weise ein Koordinatensystem zugeordnet, das in der Regel so ausgerichtet ist, daß die Koordinatenachsen orthogonal oder parallel zu den Hauptflächen des entsprechenden Körpers verlaufen.

Entsprechend einer bevorzugten Ausführungsform erscheint ein aus der Datenbank ausgewähltes Objekt in perspektivischer Darstellung auf dem Bildschirm, und nach dem Aktivieren des Objektes mittels eines Mausklicks erscheint die Repräsentation des dem Objekt zugeordneten Koordinatensystems. Diese Repräsentation des Koordinatensystems weist bestimmte Modifikationspunkte auf, die angeklickt werden müssen, um eine Modifikation durchführen zu können.

Das Vorsehen von diskreten Modifikationspunkten erleichtert die Zuweisung einer bestimmten Mauseingabeoperation zu einer gewünschten Modifikationsart. Vorzugsweise erscheint die Darstellung des Koordinatensystems daher mit einem Modifikationssymbol im Ursprung sowie an den beiden Enden der drei Koordinatenachsen. Das Koordinatensystem wird dabei vorzugsweise im Zentrum des Objektes angezeigt, kann jedoch auch außerhalb des Objektes plaziert werden. Das Plazieren des Koordinatensystems außerhalb des Objektes ermöglicht insbesondere Drehbewegungen des Objektes um eine externe Achse, wie später noch einzeln beschrieben wird.

Fig. 1 zeigt die Repräsentation des einem Objekt zugeordneten Koordinatensystems, wie sie auf dem Bilschirm erscheint. Da die Darstellung perspektivisch erfolgen muß, stehen die Achsen des dargestellten Koordinatensystems nicht senkrecht aufeinander, wie dies bei dem tatsächlich zugeordneten und für die Berechnung des manipulierten Objektes verwendeten Koordinatensystems der Fall ist. Gemäß der vorliegenden Erfindung wird eine vom Benutzer gewünschte Bewegung entlang einer der drei Achsen dadurch erkannt, daß die vom Benutzer mit der Maus ausgeführte Bewegung detektiert und ein entsprechender Bewegungsvektor erzeugt wird. Dieser Bewegungsvektor wird in seiner Ausrichtung dann mit der Ausrichtung der Achsen des Koordinatensystems in der perspektivischen Darstellung am Bildschirm verglichen. Die Bewegung des Benutzers wird als Bewegung in Richtung derjenigen Achse gewertet, die am besten mit dem Bewegungsvektor übereinstimmt. Eine derartige Überprüfung kann beispielsweise mittels Projektion des Bewegungsvektors auf die entsprechenden Achsen erfolgen, wie dem Fachmann bekannt ist.

Fig. 1 verdeutlicht die vom Benutzer auszuführende Operation, um eine Verschiebung des gestrichelt dargestellten Objektes entlang einer der Achsen X, Y, Z des zugeordneten Koordinatensystems zu erreichen. Zunächst klickt der Benutzer den kugelförmigen Modifikationspunkt im Zentrum des dargestellten Koordinatensystems an, was dazu führt, daß das System anschließend eine Verschiebeoperation erwartet. Wie oben erwähnt, wird die anschließende Mausbewegung detektiert, um einen entsprechenden Bewegungsvektor zu erhalten. Dieser Bewegungsvektor wird hinsichtlich seiner Ausrichtung mit den dargestellten Koordinatenachsen verglichen, und es wird eine Verschiebung in Richtung der Achse ausgeführt, die in ihrer Ausrichtung am besten mit dem erhaltenen Bewegungsvektor übereinstimmt. Die Länge der Verschiebung ist entsprechend proportional der vom Benutzer ausgeführten Mausverschiebebewegung. Die Verschiebung des Koordinatensystems über den Bildschirm entlang einer bestimmten Achse bewirkt eine Verschiebung des dem entsprechenden Objekt zugeordneten Koordinatensystems innerhalb eines globalen Koordinatensystems. Anhand dieser Positionsveränderung kann anschließend die Lage des zugeordneten Objektes innerhalb des globalen Koordinatensystems bestimmt werden und das entsprechende Objekt kann mit diesen neuen (absoluten) Koordinaten abgespeichert werden. Ausgehend von dem neu berechneten Objekt kann wiederum eine Darstellung für das Objekt auf dem Bildschirm in perspektivischer Ansicht berechnet werden, so daß eine Darstellung des verschobenen Objektes unmittelbar nach Verschieben der Darstellung des Koordinatensystems über den Bildschirm an der entsprechenden Stelle auf dem Bildschirm erscheint.

Fig. 2 illustriert, in welcher Weise eine Rotation des Koordinatensystems und damit des zugeordneten Objektes vorgenommen werden kann. Um eine Rotation beispielsweise um die Z-Achse auszuführen, wird einer der Modifikationspunkte an den Enden der Y-Achse angeklickt, und anschließend erfolgt eine Verschiebung entlang der X-Achse. Selbstverständlich könnte eine Drehung um die Z-Achse auch dadurch bewirkt werden, daß ein Modifikationspunkt auf der X-Achse aktiviert und anschließend durch eine entsprechende Mausbewegung in Richtung der Y-Achse gezogen wird. Wie im Falle der Verschiebung wird, basierend auf der Drehung des zugeordneten Koordinatensystems, eine entsprechende Drehung des Objektes berechnet. Nach dieser Berechnung liegt eine Beschreibung des Objektes bezüglich des globalen Koordinatensystems vor, in der die ausgeführte Drehung berücksichtigt ist. Basierend auf diesen neuen Objektdaten kann anschließend wiederum eine für die Darstellung geeignete Repräsentation des Objektes berechnet und auf dem Bildschirm angezeigt werden. Somit erscheint eine entsprechend gedrehte Repräsentation des Objektes nahezu zeitgleich mit dem Abschluß der Drehung des Koordinatensystems.

Fig. 3 illustriert, in welcher Weise eine Skalierung des Koordinatensystems und somit des zugeordneten Objektes möglich ist. Zur Stauchung des Objektes in Y-Richtung wird ein Modifikationspunkt auf der Y-Achse angeklickt und anschließend zum Zentrum des Koordinatensystems hin verschoben. Das zugeordnete Objekt erscheint somit anschließend in einer Darstellung, bei der es in Y-Richtung um einen entsprechenden Wert gestaucht ist.

Wie bereits erwähnt, kann die Lage des zugeordneten Koordinatensystems in bezug auf das entsprechende Objekt vorzugsweise frei gewählt werden. Dies hat insbesondere Vorteile, wenn verschiedene Objekte aneinandergefügt werden, da dann ein entsprechend günstiger Bezugspunkt gewählt werden kann. Insbesondere kann der Ursprung des Koordinatensystems außerhalb des zugeordneten Objektes liegen, um ein Drehen des Objektes um eine externe Achse zu ermöglichen. Wie erwähnt, wird das zugeordnete Koordinatensystem anfänglich vorzugsweise in das Zentrum des entsprechenden Objektes gelegt. Es kann jedoch auch von Anfang an eine intelligente Zuweisung erfolgen, derart, daß das Koordinatensystem in optimaler Weise zu den Hauptflächen des entsprechenden Körpers paßt. Verschiebt der Anwender das Koordinatensystem einmal aus der anfänglich zugewiesenen Position, so wird diese Verschiebung vorzugsweise gespeichert, so daß beim erneuten Aktivieren des entsprechenden Objektes das Koordinatensystem erneut in der entsprechenden speziellen Lage erscheint.

## Patentansprüche

1. Verfahren zum Modifizieren von dreidimensionalen Objekten mit einer Eingabeeinrichtung, vorzugsweise einer Mauseingabeeinrichtung, die nur zweidimensionale Eingaben gestattet, wobei das Verfahren folgende Schritte aufweist:
Erzeugen eines dreidimensionalen Objektes,
Anzeigen einer dreidimensionalen Repräsentation des dreidimensionalen Objektes auf einen Bildschirm,
Aktivieren des dreidimensionalen Objektes mittels einer Operation der Eingabeeinrichtung, die sich auf die Repräsentation des Objektes bezieht,
Verschieben des aktivierten dreidimensionalen Objektes mit der Eingabevorrichtung und
Anzeigen einer Repräsentation des verschobenen dreidimensionalen Objektes auf dem Bildschirm,
wobei das Verfahren durch die folgenden weiteren Schritte charakterisiert ist:
Anzeigen einer Repräsentation eines dreidimensionalen Koordinatensystems auf dem Bildschirm, wobei das dreidimensionale Koordinatensystem dem aktivierten dreidimensionalen Objekt zugeordnet ist,
Auswählen einer der Achsen des dreidimensionalen zugeordneten Koordinatensystems mittels einer Operation der Eingabeeinrichtung, wobei sich die Eingabeoperation auf die auf dem Bildschirm dargestellte Repräsentation des Koordinatensystems bezieht,
Verschieben des Ursprungspunktes des zugeordneten Koordinatensystems innerhalb eines globalen dreidimensionalen Koordinatensystems entlang einer Geraden, die durch die Orientierung der ausgewählten Achse des zugeordneten Koordinatensystems innerhalb des globalen dreidimensionalen Koordinatensystems festgelegt ist und in eine Richtung auf der Geraden, die durch eine Operation mittels der Eingabeeinrichtung festgelegt wird, und
Berechnen des dreidimensionalen Objektes in bezug auf das globale Koordinatensystem nach einer Verschiebung entsprechend der Verschiebung des Urprungspunktes des zugeordneten Koordinatensystems.

2. Verfahren nach Anspruch 1 mit folgenden weiteren Schritten:
Auswählen einer ersten Achse des zugeordneten dreidimensionalen Koordinatensystems mittels einer Operation der Eingabeeinrichtung, wobei sich die Eingabeoperation auf die auf dem Bildschirm dargestellte Repräsentation des zugeordneten Koordinatensystems bezieht,
Drehen des zugeordneten Koordinatensystems um die entsprechende zweite oder dritte Koordinatenachse, wobei die zweite Achse ausgewählt wird, wenn mittels der Eingabeeinrichtung eine Verschiebung der ersten Achse in Richtung der dritten Achse vorgegeben wird und wobei um die dritte Achse gedreht wird, wenn mittels der Eingabeeinrichtung eine Verschiebung der ersten Achse in Richtung der zweiten Achse vorgegeben wird,
Berechnen des dreidimensionalen Objektes bezüglich des globalen Koordinatensystems nach einer Drehung des Objektes entsprechend der Drehung des zugeordneten Koordinatensystems, und
Anzeigen einer Repräsentation des gedrehten dreidimensionalen Objektes auf dem Bildschirm.

3. Verfahren nach Anspruch 1 oder 2 mit folgenden weiteren Schritten:
Auswählen einer Achse des zugeordneten dreidimensionalen Koordinatensystems mittels einer Operation der Eingabeeinrichtung, wobei sich die Eingabeoperation auf die auf dem Bildschirm dargestellte Repräsentation des Koordinatensystems bezieht,
Eingeben einer Dehnung oder Streckung der ausgewählten Achse des zugeordneten Koordinatensystems mittels der Eingabeeinrichtung,
Berechnen des dreidimensionalen Objektes bezüglich des globalen Koordinatensystems nach einer entsprechenden Streckung oder Stauchung des Objektes entlang der ausgewählten Achse des zugeordneten Koordinatensystems, und
Anzeigen einer dreidimensionalen Repräsentation des gestreckten oder gestauchten dreidimensionalen Objektes auf dem Bildschirm.

4. Verfahren nach einem der Ansprüche 1 bis 3, wobei die Eingabeeinrichtung eine Mauseinrichtung ist, mit der die Achsen des zugeordneten Koordinatensystems durch Anklicken ausgewählt werden können und durch die eine Verschiebung des zugeordneten Koordinatensystems oder eine Verschiebung einer Achse des zugeordneten Koordinatensystems zwecks Drehung oder ein Strecken bzw. Stauchen einer Achse des zugeordneten Koordinatensystems durch eine entsprechend gerichtete Mausbewegung bewirkt wird.

5. Verfahren nach Anspruch 4, wobei ein ausgeführter Mausklick oder eine ausgeführte Mausbewegung in diejenige Objektmodifikation umgesetzt wird, die unter Berücksichtigung der auf dem Bildschirm angezeigten Repräsentation des dreidimensionalen Objektes oder des zugeordneten Koordinatensystems unter den prinzipiell möglichen Modifikationen mit größter Wahrscheinlichkeit vom Benutzer gewollt war.

6. Verfahren nach einem der Ansprüche 1 bis 5, wobei die auf dem Bildschirm angezeigte Repräsentation des zugeordneten Koordinatensystems im Ursprung sowie an den Enden der dargestellten Achsen Modifikationspunkte aufweist und eine Modifikation des Koordinatensystems nur durch Anklicken dieser Symbole möglich ist.

7. Verfahren nach Anspruch 6, wobei eine Verschiebung des zugeordneten Koordinatensystems durch Anklicken des Modifikationspunktes im Ursprung der Repräsentation des zugeo;dneten Koordinatensystems und eine anschließende entsprechend gerichtete Bewegung der Maus bewirkt wird, wobei eine Drehung des zugeordneten Koordinatensystems durch Anklicken des Modifikationspunktes an einer der Achsen der Repräsentation des zugeordneten Koordinatensystems sowie einer darauffolgenden entsprechend gerichteten Mausbewegung bewirkt wird und wobei ein Strecken oder Stauchen einer Achse des zugeordneten Koordinatensystems durch Anklicken des Modifikationspunktes der entsprechenden Achse der Repräsentation des zugeordneten Koordinatensystems und einer entsprechend gerichteten Mausbewegung entlang der entsprechenden Achse der Repräsentation bewirkt wird.

8. Verfahren nach einem der vorhergehenden Ansprüche, wobei die Lage der Modifikationspunkte frei wählbar ist und nicht zwingend auf den Achsen des Koordinatensystems liegt.

9. Verfahren nach einem der Ansprüche 1 bis 8, wobei die Lage des Ursprungs des zugeordneten Koordinatensystems in bezug auf das entsprechende Objekt frei wählbar ist und insbesondere außerhalb des Objektes liegen kann.

10. Verfahren nach einem der Ansprüche 1 bis 9, wobei sich das zugeordnete Koordinatensystem verschieben oder drehen oder skalieren läßt, ohne daß dies Einfluß auf das zugeordnete Objekt hat.

11. Verfahren nach einem der Ansprüche 1 bis 10, wobei das zugeordnete Koordinatensystem verschoben werden kann, gedreht werden kann oder skaliert werden kann, um an ein anderes Objekt angelagert zu werden, ohne daß dies unmittelbar Einfluß auf das zugeordnete Objetkt hat und das zugeordnete Objekt anschließend an die durch das Koordinatensystem vorgegebene Position und in die entsprechende Orientierung gebracht wird.

12. Verfahren nach einem der Ansprüche 1 bis 11, wobei die Lage des zugeordneten Koordinatensystems für ein Objekt, das aus einer Datenbank ausgelesen wird, automatisch in geeigneter Weise entsprechend der Raumform des Objektes gewählt wird.

## Claims

1. Method for the modification of three-dimensional objects by means of an input device, the input device preferably being a mouse input device permitting only two-dimensional inputs, the method comprising the following steps:
- creating a three-dimensional object;
- displaying a three-dimensional representation of the three-dimensional object on a computer screen;
- activating the three-dimensional object by way of an operation of the input device relating to the representation of the object;
- shifting the activated three-dimensional object by means of the input device;
- displaying a representation of the shifted three-dimensional object on the computer screen;
wherein the method is characterized by the following further steps:
- displaying a representation of a three-dimensional coordinate system on the computer screen with the three-dimensional coordinate system being assigned to the activated three-dimensional object;
- selecting one of the axes of the three-dimensional coordinate system assigned to the object by means of an operation of the input device, with the input operation relating to the representation of the coordinate system displayed on the screen;
- shifting the origin of the coordinate system assigned to the object within a global three-dimensional coordinate system along a line defined by the orientation of the selected axis of the assigned coordinate system within the global three-dimensional coordinate system, and in one direction along the line which is determined by an operation performed with the input device; and
- computing the three-dimensional object relative to the global coordinate system after moving the object in accordance with the movement of the origin of the assigned coordinate system.

2. Method according to claim 1 including the following further steps:
- selecting a first axis of the three-dimensional coordinate system assigned to the object by way of an operation of the input device with the input operation relating to the representation of the assigned coordinate system displayed on the screen;
- rotating the assigned coordinate system around either the second or third coordinate axis with the second axis being selected, if a movement of the first axis towards the third axis is induced by means of the input device and wherein the rotation is performed around the third axis if a movement of the first axis towards the second axis is induced by means of the input device;
- computing the three-dimensional object relative to the global coordinate system after rotation of the object in accordance with the rotation of the assigned coordinate system; and
- displaying a representation of the rotated three-dimensional object on the computer screen.

3. Method according to claim 1 or claim 2 including the following further steps:
- selecting an axis of the three-dimensional coordinate system assigned to the object by way of an operation of the input device with the input operation relating to the representation of the assigned coordinate system displayed on the screen;
- entering an operation of stretching or compressing the selected axis of the coordinate system assigned to the object by means of the input device;
- computing the three-dimensional object relative to the global coordinate system after stretching or compressing the object along the selected axis of the assigned coordinate system; and
- displaying a three-dimensional representation of the stretched or compressed three-dimensional object on the computer screen.

4. Method according to one of claims 1 to 3, with the input device being a mouse device which can be used to select the axes of the assigned coordinate system by clicking; the mouse can further be used to induce a displacement of the assigned coordinate system or movement of one of the axes of the assigned coordinate system to effectuate a rotation or stretching or compression of one of the axes of the assigned coordinate system by means of an appropriately directed mouse operation.

5. Method according to claim 4, wherein a performed mouse click or shift operation is translated to the object modification which - taking into consideration the representation of the three-dimensional object displayed on the screen or the assigned coordinate system - from the choice of possible modification types with the highest probability matches the user's intention.

6. Method according to one of claims 1 to 5, wherein the representation of the assigned coordinate system displayed on the screen is provided with modification points at its origin as well as at the endpoints of the displayed axes and a modification of the coordinate system can be performed only by clicking on these symbols.

7. Method according to claim 6, wherein the displacement of the assigned coordinate system is induced by clicking the modification point at the origin of the representation of the assigned coordinate system and subsequently performing an accordingly directed movement with the mouse; wherein a rotation of the assigned coordinate system is induced by clicking the modification points at one of the axes of the representation of the assigned coordinate system and subsequently performing an accordingly directed movement with the mouse; and wherein a stretching or compression of an axis of the assigned coordinate system is induced by clicking a modification point of the respective axis of the representation of the assigned coordinate system and subsequently performing an accordingly directed movement with the mouse along the respective axis of the representation.

8. Method according to any preceding claim, wherein the position of the modification points can be freely selected and is not required to lie on the axes of the coordinate system.

9. Method according to any of claims 1 to 8, wherein the position of the origin of the assigned coordinate system can be freely selected relative to the corresponding object and can in particular lie outside the object.

10. Method according to any of claims 1 to 9, wherein the assigned coordinate system can be moved or rotated or scaled without this modification having any effect on the related object.

11. Method according to any of claims 1 to 10, wherein the assigned coordinate system can be moved, rotated or scaled in order to be attributed to another object without this modification having immediate influence on the related object and the related object being afterwards relocated to the position determined by the coordinate system and shifted to the corresponding orientation.

12. Method according to any of claims 1 to 11, wherein the position of the coordinate system assigned to an object retrieved from a database is automatically chosen in such a way that it best suits the shape of the object.

## Revendications

1. Procédé pour modifier des objets à trois dimensions par un dispositif d'entrée, de préférence un dispositif d'entrée de type souris, qui ne permet que des entrées à deux dimensions, le procédé comprenant les étapes suivantes :
- générer un objet à trois dimensions,
- afficher sur un écran une représentation à trois dimensions de l'objet à trois dimensions,
- activer l'objet à trois dimensions au moyen d'une opération du dispositif d'entrée, qui fait référence à la représentation de l'objet,
- déplacer l'objet à trois dimensions activé par le dispositif d'entrée, et
- afficher à l'écran une représentation de l'objet à trois dimensions déplacé,
le procédé étant caractérisé par les étapes supplémentaires suivantes :
- afficher à l'écran une représentation d'un système de coordonnées à trois dimensions, le système de coordonnées à trois dimensions étant affecté à l'objet à trois dimensions activé,
- sélectionner l'un des axes du système de coordonnées à trois dimensions affecté, au moyen d'une opération du dispositif d'entrée, l'opération d'entrée faisant référence à la représentation illustrée à l'écran du système de coordonnées,
- déplacer le point d'origine du système de coordonnées affecté à l'intérieur d'un système de coordonnées à trois dimensions global suivant une droite, qui est déterminée par l'orientation de l'axe choisi du système de coordonnées affecté à l'intérieur du système de coordonnées à trois dimensions global et dans une direction sur la droite, qui est déterminée par une opération au moyen du dispositif d'entrée, et
- calculer un objet à trois dimensions par rapport au système de coordonnées global suite à un déplacement selon le déplacement du point d'origine du système de coordonnées affecté.

2. Procédé selon la revendication 1, comprenant les étapes supplémentaires suivantes :
- sélectionner un premier axe du système de coordonnées à trois dimensions affecté, au moyen d'une opération du dispositif d'entrée, l'opération d'entrée faisant référence à la représentation illustrée à l'écran du système de coordonnées affecté,
- faire tourner le système de coordonnées affecté autour du deuxième ou troisième axe de coordonnées correspondant, le deuxième axe étant sélectionné si, au moyen du dispositif d'entrée, un déplacement du premier axe est prédéfini dans la direction du troisième axe, et la rotation étant effectuée autour du troisième axe si, au moyen du dispositif d'entrée, un déplacement du premier axe est prédéfini dans la direction du deuxième axe,
- calculer l'objet à trois dimensions par rapport au système de coordonnées global, suite à une rotation de l'objet selon la rotation du système de coordonnées affecté, et
- afficher à l'écran une représentation de l'objet à trois dimensions ayant subi une rotation.

3. Procédé selon la revendication 1 ou 2, comprenant les étapes supplémentaires suivantes :
- sélectionner un axe du système de coordonnées à trois dimensions affecté, au moyen d'une opération du dispositif d'entrée, l'opération d'entrée faisant référence à la représentation illustrée à l'écran du système de coordonnées,
- entrer un allongement ou une extension de l'axe sélectionné du système de coordonnées affecté, au moyen du dispositif d'entrée,
- calculer l'objet à trois dimensions par rapport au système de coordonnées global suite à une extension ou une compression correspondante de l'objet suivant l'axe sélectionné du système de coordonnées affecté, et
- afficher à l'écran une représentation à trois dimensions de l'objet à trois dimensions étendu ou comprimé.

4. Procédé selon l'une quelconque des revendications 1 à 3, dans lequel le dispositif d'entrée est un dispositif de type souris, qui permet de sélectionner en cliquant les axes du système de coordonnées affecté et qui provoque un déplacement du système de coordonnées affecté ou un déplacement d'un axe du système de coordonnées affecté en vue d'une rotation ou d'une extension ou compression d'un axe du système de coordonnées affecté par un mouvement de souris orienté de façon appropriée.

5. Procédé selon la revendication 4, dans lequel un clic de souris effectué ou un mouvement de souris effectué est converti en celle des modifications d'objet qui était voulue par l'utilisateur avec la plus grande probabilité, compte tenu de la représentation affichée à l'écran de l'objet à trois dimensions ou du système de coordonnées affecté parmi les modifications possibles en principe.

6. Procédé selon l'une quelconque des revendications 1 à 5, dans lequel la représentation affichée à l'écran du système de coordonnées affecté présente des points de modification à l'origine ainsi qu'aux extrémités des axes représentés, et une modification du système de coordonnées est possible uniquement en cliquant sur ces symboles.

7. Procédé selon la revendication 6, dans lequel un déplacement du système de coordonnées affecté est provoqué en cliquant sur le point de modification à l'origine de la représentation du système de coordonnées affecté et un mouvement consécutif de la souris, orienté de façon appropriée, une rotation du système de coordonnées affecté étant provoquée en cliquant sur le point de modification sur l'un des axes de la représentation du système de coordonnées affecté ainsi que par un mouvement de souris consécutif orienté de façon appropriée, et une extension ou compression d'un axe du système de coordonnées affecté étant provoquée en cliquant sur le point de modification de l'axe correspondant de la représentation du système de coordonnées affecté et un mouvement de souris orienté de façon correspondante suivant l'axe correspondant de la représentation.

8. Procédé selon l'une quelconque des revendications précédentes, dans lequel la position des points de modification peut être sélectionnée librement et ne se trouve pas nécessairement sur les axes du système de coordonnées.

9. Procédé selon l'une quelconque des revendications 1 à 8, dans lequel la position de l'origine du système de coordonnées affecté peut être sélectionnée librement par rapport à l'objet correspondant et peut se trouver en particulier à l'extérieur de l'objet.

10. Procédé selon l'une quelconque des revendications 1 à 9, dans lequel le système de coordonnées affecté peut être déplacé ou tourné ou mis à l'échelle, sans que l'objet affecté ne soit influencé.

11. Procédé selon l'une quelconque des revendications 1 à 10, dans lequel le système de coordonnées affecté peut être déplacé, tourné ou mis à l'échelle pour être adjacent à un autre objet, sans que cela n'ait une influence directe sur l'objet affecté, et l'objet affecté est ensuite amené jusqu'à la position prédéfinie par le système de coordonnées et dans l'orientation correspondante.

12. Procédé selon l'une quelconque des revendications 1 à 11, dans lequel la position du système de coordonnées affecté, pour l'objet qui est extrait d'une base de données, est sélectionnée automatiquement de façon appropriée selon la forme spatiale de l'objet.
